# EUROPEAN PATENT SPECIFICATION

(11) **EP 2 592 282 B1**
(45) Date of publication and mention of the grant of the patent: **12.02.2014**
(21) Application number: 11195405.3
(22) Date of filing: 22.12.2011
(51) Int. Cl.: F16B 4/00

(54) **System and method for installing a fastener rod**
System und Verfahren zur Installation einer Befestigungsstange
Système et procédé pour installer une tige de fixation

(30) Priority: 11.11.2011 US 201113294686
(43) Date of publication of application: 15.05.2013
(73) Proprietor: Bell Helicopter Textron Inc., Fort Worth, TX 76101 (US)
(72) Inventor: Ehinger, Ryan T, Irving, TX Texas 75063 (US); Hill, Wayland, Keller, TX Texas 76248 (US); Mueller, Doug, Coppell, TX Texas 75109 (US)
(74) Representative: Lawrence, John

(56) References cited:
- EP-A1- 0 743 136
- US-A- 3 970 158
- US-A1- 2008 035 384

## Description

### BACKGROUND

### 1. Field of the Invention

This disclosure relates in general to the field of fasteners, and more particularly to a system and method for installing a fastener rod installation.

### 2. Description of Related Art

Fastener rods, such as dowel pins and threaded studs, can be machined to tight tolerances and are frequently used as fasteners for mechanical components that require such tolerances, such as gear casings, engines, and transmissions in rotorcraft drive systems.

Many close tolerance applications demand an interference fit or transition fit between a fastener rod and a corresponding insertion hole. For metal parts in particular, the friction that holds the parts together is often greatly increased by compression of one part against the other, which relies on the tensile and compressive strengths of the materials the parts are made from.

A liquid primer or oil is often desirable to facilitate a satisfactory fit or reduce corrosion at the interface of the mating components, but the liquid may be highly incompressible and can result in cracked cases due to pressurization or inaccurate install torque when compressed. Systems and methods for remedying this problem can be costly and can result in many scrapped parts.

Thus, the design of a safe, cost-effective system and method for installing fastener rods continues to present significant challenges to engineers and manufacturers.

Although great strides have been made in head coverings, considerable shortcomings remain.

The following documents were located in the European search: EP0743136 (Nippon Pneumatic Manufacturing Co. Ltd.), which describes a method of manufacturing a chisel for impact tool; and US 3970158 (Black et al) which discusses tooth loading for earth boring bits.

### DESCRIPTION OF THE DRAWINGS

The novel features believed characteristic of the application are set forth in the appended claims. However, the application itself, as well as a preferred mode of use, and further objectives and advantages thereof, will best be understood by reference to the following detailed description when read in conjunction with the accompanying drawings, wherein:
**Figures 1A-1C** are simplified block diagrams of one embodiment of a system and method for installing a fastener rod into an insertion hole according to this specification; and
**Figures 2A-2C** are simplified schematic diagrams that illustrate additional details that may be associated with example embodiments of a rod starter according to this specification.

While the system and method of the present application is susceptible to various modifications and alternative forms, specific embodiments thereof have been shown by way of example in the drawings and are herein described in detail. It should be understood, however, that the scope of the present application is defined by the appended claims.

### DETAILED DESCRIPTION OF THE PREFERRED EMBODIMENT

Illustrative embodiments of the novel system are described below. In the interest of clarity, not all features of such embodiments may be described. It should be appreciated that in the development of any such system, numerous implementation-specific decisions can be made to achieve specific goals, such as compliance with system-related and business-related constraints, which will vary from one implementation to another. Moreover, it should be appreciated that such decisions might be complex and time-consuming, but would nevertheless be a routine undertaking for those of ordinary skill in the art having the benefit of this disclosure.

Reference may be made to the spatial relationships between various components and to the spatial orientation of various aspects of components as the system is depicted in the attached drawings. However, as should be recognized by those skilled in the art, the elements, members, components, etc. described herein may be positioned in any desired orientation. Thus, the use of terms such as "above," "below," "upper," "lower," or other like terms to describe a spatial relationship between various components or to describe the spatial orientation of aspects of such components should be understood to describe a relative relationship between the components or a spatial orientation of aspects of such components, respectively, as the example embodiments described herein may be oriented in any desired direction.

For purposes of illustrating the techniques of a system and method for fastener rod installation with an interference fit in example embodiments, it is important to understand the principles and challenges within a given environment. The following foundational information is offered for purposes of explanation only and, accordingly, should not be construed in any way to limit the broad scope of the system, methods, and potential applications described herein.

The term "fastener" refers generally to a broad class of devices that mechanically join or locate two components together, while the term "fastener rod" refers generally to a subset of solid, cylindrical fasteners. Fastener rods may include threaded rods (e.g., a stud) and unthreaded rods (e.g., a dowel, dowel rod, dowel pin, etc.). Typical drilling and milling operations, as well as manufacturing practices for bolt threads, can introduce mechanical play proportional to the size of the fasteners. However, many types of fastener rods can be machined to tight tolerances, which typically result in significantly less play. Thus, fastener rods can often be used for precise location and mating alignment in machine assembly. In particular, engineers often use dowel holes or stud bosses as reference points to control position variations and to attain repeatable assembly quality. Without such reference points for alignment (e.g., components are mated by bolts only), there can be significant variation, or "play", in component alignment.

Many engineering applications demand a binding fit between a fastener rod and the components that it joins. For example, an interference fit, also known as a press fit or friction fit, can be achieved by friction after components are mated, rather than by other means of fastening. For metal components in particular, the friction that holds the components together can be greatly increased by compression of one component against the other, which relies on the tensile and compressive strengths and stiffness of the materials the components are made from. A transition fit may also bind two components together, but is not so tight that it prevents disassembly.

A binding fit between a fastener rod and a component can generally be achieved by shaping them so that one or the other (or both) slightly deviate in size from a nominal dimension. For example, an unthreaded rod such as a dowel rod may be machined slightly larger than the nominal dimension for an interference fit. Additionally or alternatively, an insertion hole in a component may be reamed so that it is slightly less than the nominal dimension. If the dowel rod is then pressed into the hole, the dowel rod interferes with the component's occupation of space. The desired result is that they elastically deform slightly, and the interface between them is one of extremely high friction so that even large amounts of torque cannot turn one of them relative to the other. An interference fit may also be used for a threaded rod, such as a stud, with overlapping external and internal threads. For example, an interference fit stud can be used if the stud needs to be restrained in its tapped hole against loosening in service or when a nut is removed.

A primer is often desirable to facilitate an interference fit and/or reduce corrosion in the interface, but the primer may be a highly incompressible fluid and can result in cracked cases or inaccurate install torque when compressed. For example, lubricant in a 0.8cm (5/16") stud boss can create pressure in excess of 207MPa (30 ksi) after stud installation. Systems and methods for remedying this problem can be costly and can result in many scrapped parts.

For example, a drilled vent hole in a housing can allow fluid (i.e., liquid and/or gas) to escape upon installation, but requires additional machining operations that increases component cost and can result in significant waste. A drilled fastener rod can also allow fluid to escape upon rod installation, but may only be practical for short rods not exposed to the atmosphere where there is a risk of corrosion on the rod interior. Moreover, the cost for such non-standard parts also increases component cost. A keyway or slotted vent may also be cut in the side of a rod, but such a feature can weaken the rod and increase the potential for corrosion. Leaving a sufficient air gap at the bottom of an insertion hole can also reduce pressure, but liquid primer can also build up in the hole if not sufficiently cleaned prior to installation, which can be very susceptible to human error.

In accordance with embodiments disclosed herein, a rod starter insert can substantially reduce or eliminate many of these shortcomings (and others) without modifying parts or significantly increasing cost. In one embodiment, the rod starter insert is a closed-cell foam having a low density and high compressibility, which can be placed in an insertion hole prior to installation of a fastener rod. Thus, the insert can displace fluid (e.g., primer and/or oil) in the hole, but may be significantly compressed during installation such that the fastener rod can be fully installed without over-pressurizing the hole.

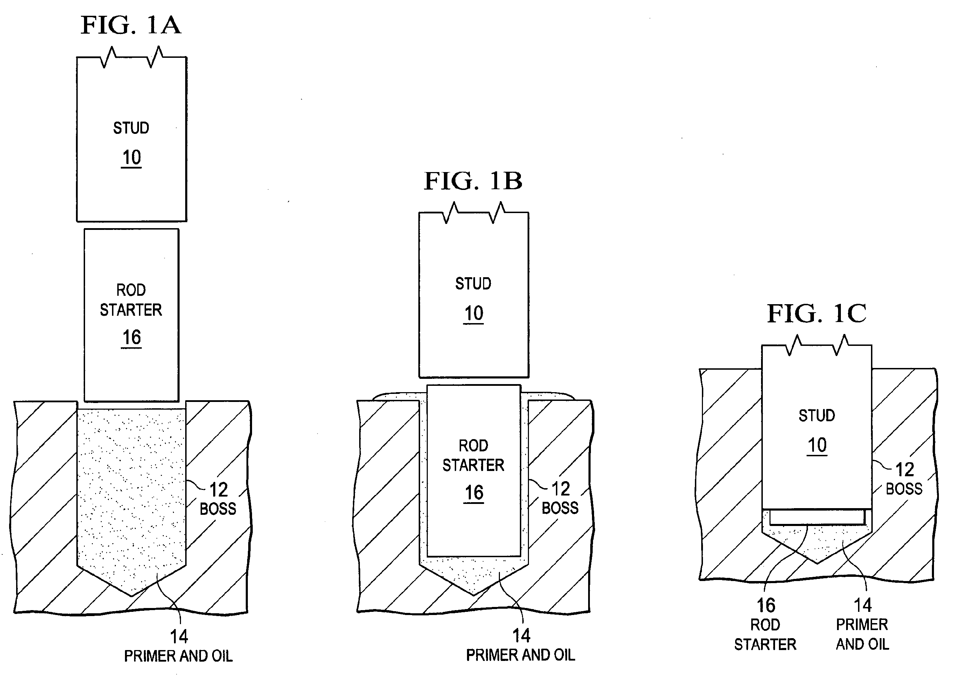

Figure 1A is a simplified block diagram of one embodiment of a system for installing a fastener rod into an insertion hole. In this particular embodiment, the fastener rod is a stud (i.e., a threaded rod) 10 and the insertion hole is a stud boss 12. Stud 10 and stud boss 12 may be lubricated with a fluid, such as primer and oil 14. A rod starter 16 may be placed over and longitudinally aligned with stud boss 12. Figure 1B is a simplified block diagram of the system of Figure 1A in which rod starter 16 is inserted into stud boss 12 to displace primer and oil 14 from stud boss 12. Figure 1C is a simplified block diagram of the system in Figure 1A in which stud 10 is installed into stud boss 12. Installation of stud 10 into stud boss 12 compresses rod starter 16. The volume reduction of rod starter 16 may vary considerably based on design requirements, but assuming a 90% reduction in volume, the air pressure in stud boss 12 should only increase by approximately 965kPa (140 psi). Preferably, stud boss 12 provides sufficient room to accommodate residual fluid, compressed air, and rod starter 16.

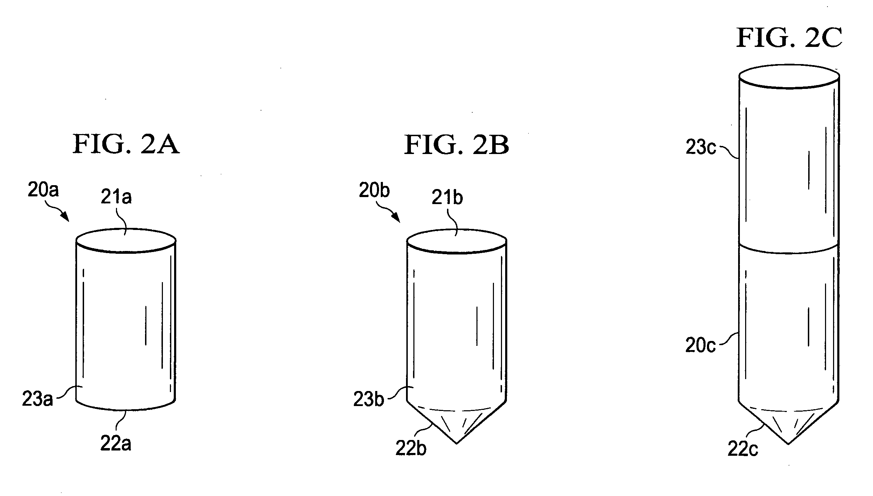

Figures 2A-2C are simplified schematic diagrams that illustrate additional details that may be associated with certain example embodiments of a rod starter. In general, a rod starter may be molded, fabricated, or cut to conform to the shape of any insertion hole, but is preferably a cylindrical block element. In Figure 2A, for example, a rod starter 20a has two opposing ends 21a-22a and an elongated body with a cylindrical wall 23a. Rod starter 20a can be installed in a corresponding insertion hole without regard to orientation of ends 21a-22a. Figure 2B, however, illustrates a rod starter 20b having a flat end 21b and a distal end 22b adapted to conform to a feature in an insertion hole. For example, distal end 22b may be substantially conical to conform to a drill point in an insertion hole, for example. Thus, rod starter 20b may displace more fluid than rod starter 20a when tapered end 22b is properly oriented and installed in the bottom of a corresponding insertion hole. Figure 2C illustrates yet another embodiment of a rod starter 20c bonded to a fastener rod 23c. In this particular example, rod starter 20c has a tapered end 22c similar to tapered end 22b, but may alternatively have a flat surface similar to surface 22a. In more particular embodiments, a rod starter may also be sized such that fluid can escape an insertion hole through channels or grooves in the side of the starter rod, or between clearance space between the body of the starter and walls of an insertion hole.

A rod starter element may be constructed from any closed cell foam having sufficiently low density and high compressibility that it can displace fluid in an insertion hole and be compressed to allow full installation of a fastener rod without over-pressurizing the hole. For example, a rod starter element may be constructed from rigid polystyrene foam, including expanded or extruded polystyrene foam (e.g., STYROFOAM).

The system and apparatus described herein provides significant advantages, some of which have already been mentioned. For example, a rod starter as described herein may be a passive device not requiring changes to components or fastener rods. It can be made of highly compressible and rigid closed cell material that can retain its shape to displace fluid yet may be readily compressed during rod installation. Moreover, a rod starter can be sized such that after insertion, fluid in the hole can be compressed to the maximum amount required by a given design with pressurization of the hole well below design limits. A rod starter may be shaped like a cylinder that can be installed in any direction, or like a pointed cylinder that can be installed one way and displace more fluid. A rod starter can also be installed freely prior to rod installation or may be bonded to the rod to further facilitate proper installation.

Certain example embodiments have been shown in the drawings and described above, but variations in these embodiments will be apparent to those skilled in the art. The principles disclosed herein are readily applicable to a variety of industries and mechanical components needing close tolerance fasteners, including rotorcraft drive systems.

## Claims

1. A fastener rod starter (16, 20a, 20b, 20c) apparatus, comprising:
a first end (21a, 21b) for engaging a fastener rod (10, 23c);
a second end (22a, 22b, 22c) for insertion into an insertion hole (12); and
an elongated body of closed cell foam having sufficiently low density and high compressibility to displace fluid (14) in the insertion hole and be compressed to allow installation of the fastener rod into the insertion hole.

2. The apparatus of claim 1, wherein the elongated body is a substantially cylindrical body.

3. The apparatus of claim 1 or claim 2, wherein the closed cell foam is closed cell polystyrene foam or closed cell extruded polystyrene foam.

4. The apparatus of any of claims 1, or 2 or 3, wherein the second end (22a, 22b, 22c) is adapted to mate with a feature of the insertion hole,

5. The apparatus of any of claims 1 to 4, wherein the second end (22a, 22b, 22c) is conical.

6. The apparatus of any preceding claim, wherein the fastener rod (23c) is bonded to the first end.

7. The apparatus of any preceding claim, wherein the fastener rod is a threaded fastener rod.

8. The apparatus of any preceding claim, wherein the fastener rod is a threaded fastener rod bonded to the first end.

9. The apparatus of any preceding claim, wherein the elongated body comprises channels between the first end and the second end.

10. The apparatus of any preceding claim, wherein the elongated body is sized to provide a clearance space between the elongated body and the insertion hole.

11. The apparatus of any preceding claim, wherein:
the elongated body is a substantially cylindrical body;
the closed cell foam is closed cell extruded polystyrene foam;
the fastener rod is bonded to the first end; and
the second end is conical.

12. A method for installing a fastener rod (10, 23C), comprising:
lubricating an insertion hole (12) with a fluid (14);
inserting a starter element into the insertion hole, wherein the starter element comprises a closed cell foam having sufficiently low density and high compressibility to displace the fluid in the insertion hole and be compressed to allow installation of the fastener rod into the insertion hole; and
inserting the fastener rod into the insertion hole onto the starter element, thereby displacing the fluid in the insertion hole and compressing the starter element.

## Patentansprüche

1. Eine Befestigungsstangen-Starter (16, 20a, 20b, 20c) -Vorrichtung, umfassend:
ein erstes Ende (21a, 21b) zum Einklinken einer Befestigungsstange (10, 23c);
ein zweites Ende (22a, 22b, 22c) zum Einführen in ein Einführloch (12); und
einen länglichen Körper aus geschlossenzelligem Schaumstoff mit ausreichend geringer Dichte und hoher Komprimierbarkeit, um Flüssigkeit (14) im Einführloch zu verdrängen und um komprimiert zu werden, sodass die Installation der Befestigungsstange in das Einführloch ermöglicht wird.

2. Die Vorrichtung von Anspruch 1, wobei der längliche Körper ein überwiegend zylindrischer Körper ist.

3. Die Vorrichtung von Anspruch 1 oder Anspruch 2, wobei der geschlossenzellige Schaumstoff ein geschlossenzelliger Polystyrolschaum oder geschlossenzelliger extrudierter Polystyrolschaum ist.

4. Die Vorrichtung von Anspruch 1 oder 2 oder 3, wobei das zweite Ende (22a, 22b, 22c) angepasst ist, um sich mit einem Bestandteil des Einführlochs zu verbinden.

5. Die Vorrichtung von Anspruch 1 bis 4, wobei das zweite Ende (22a, 22b, 22c) konisch ist.

6. Die Vorrichtung von einem vorhergehenden Anspruch, wobei die Befestigungsstange (23c) mit dem ersten Ende verbunden ist.

7. Die Vorrichtung von einem vorhergehenden Anspruch, wobei die Befestigungsstange mit einem Gewinde versehen ist.

8. Die Vorrichtung von einem vorhergehenden Anspruch, wobei die mit einem Gewinde versehene Befestigungsstange mit dem ersten Ende verbunden ist.

9. Die Vorrichtung von einem vorhergehenden Anspruch, wobei der längliche Körper Kanäle zwischen dem ersten Ende und dem zweiten Ende umfasst.

10. Die Vorrichtung von einem vorhergehenden Anspruch, wobei der längliche Körper eine entsprechende Größe aufweist, um einen Abstand zwischen dem länglichen Körper und dem Einführloch bereitzustellen.

11. Die Vorrichtung von einem vorhergehenden Anspruch, wobei:
der längliche Körper im Wesentlichen ein zylindrischer Körper ist;
der geschlossenzellige Schaumstoff ein geschlossenzelliger extrudierter Polystyrolschaum ist;
die Befestigungsstange mit dem ersten Ende verbunden ist; und
das zweite Ende konisch ist.

12. Ein Verfahren zur Installierung einer Befestigungsstange (10, 23c), umfassend:
Schmieren eines Einführlochs (12) mit einer Flüssigkeit (14);
Einführen eines Starterelements in das Einführloch, wobei das Starterelement einen geschlossenzelligen Schaumstoff umfasst, der eine ausreichend geringe Dichte und hohe Komprimierbarkeit aufweist, um die Flüssigkeit (14) im Einführloch zu verdrängen und um die Installation der Befestigungsstange in das Einführloch zu ermöglichen; und
Einführen der Befestigungsstange in das Einführloch auf das Starterelement, wodurch die Flüssigkeit im Einführloch verdrängt und das Starterelement komprimiert wird.

## Revendications

1. Un appareil amorceur de tige de fixation (16, 20a, 20b, 20c), comprenant :
une première extrémité (21a, 21b) destinée à entrer en prise avec une tige de fixation (10, 23c),
une deuxième extrémité (22a, 22b, 22c) destinée à une insertion dans un trou d'insertion (12), et
un corps allongé de mousse à cellules fermées possédant une densité suffisamment faible et une compressibilité suffisamment élevée pour déplacer un fluide (14) dans le trou d'insertion et être comprimé de façon à permettre l'installation de la tige de fixation dans le trou d'insertion.

2. L'appareil selon la Revendication 1, où le corps allongé est un corps sensiblement cylindrique.

3. L'appareil selon la Revendication 1 ou 2, où la mousse à cellules fermées est une mousse de polystyrène à cellules fermées ou une mousse de polystyrène extrudée à cellules fermées.

4. L'appareil selon l'une quelconque des Revendications 1, 2 ou 3, où la deuxième extrémité (22a, 22b, 22c) est adaptée de façon à s'accoupler à une caractéristique du trou d'insertion,

5. L'appareil selon l'une quelconque des Revendications 1 à 4 où la deuxième extrémité (22a, 22b, 22c) est conique.

6. L'appareil selon l'une quelconque des Revendications précédentes, où la tige de fixation (23c) est reliée à la première extrémité.

7. L'appareil selon l'une quelconque des Revendications précédentes, où la tige de fixation est une tige de fixation filetée.

8. L'appareil selon l'une quelconque des Revendications précédentes, où la tige de fixation est une tige de fixation filetée reliée à la première extrémité.

9. L'appareil selon l'une quelconque des Revendications précédentes, où le corps allongé comprend des canaux entre la première extrémité et la deuxième extrémité.

10. L'appareil selon l'une quelconque des Revendications précédentes, où le corps allongé est dimensionné de façon à fournir un espace de dégagement entre le corps allongé et le trou d'insertion.

11. L'appareil selon l'une quelconque des Revendications précédentes, où :
le corps allongé est un corps sensiblement cylindrique,
la mousse à cellules fermées est une mousse de polystyrène extrudée à cellules fermées,
la tige de fixation est reliée à la première extrémité, et
la deuxième extrémité est conique.

12. Un procédé d'installation d'une tige de fixation (10, 23c) comprenant :
la lubrification d'un trou d'insertion (12) avec un fluide (14),
l'insertion d'un élément d'amorçage dans le trou d'insertion, où l'élément d'amorçage contient une mousse à cellules fermées possédant une densité suffisamment faible et une compressibilité suffisamment élevée pour déplacer le fluide dans le trou d'insertion et être comprimé de façon à permettre l'installation de la tige de fixation dans le trou d'insertion, et
l'insertion de la tige de fixation dans le trou d'insertion sur l'élément d'amorçage, déplaçant ainsi le fluide dans le trou d'insertion et comprimant l'élément d'amorçage.
